Europäisches Patentamt

European Patent Office

Office européen des brevets

(11) Veröffentlichungsnummer: **0 322 508**
**B1**

(12) # EUROPÄISCHE PATENTSCHRIFT

(45) Veröffentlichungstag der Patentschrift:
**17.10.90**

(51) Int. Cl.⁵: **F16L 39/00**, F16L 9/18,
F16L 41/00

(21) Anmeldenummer: **88113381.3**

(22) Anmeldetag: **18.08.88**

(54) **Rohrverbindungs-Element.**

(30) Priorität: **30.12.87  DE 3744510**

(43) Veröffentlichungstag der Anmeldung:
**05.07.89 Patentblatt 89/27**

(45) Bekanntmachung des Hinweises auf die Patenterteilung:
**17.10.90 Patentblatt 90/42**

(84) Benannte Vertragsstaaten:
**DE ES FR GB IT NL SE**

(56) Entgegenhaltungen:
**DE-A- 2 706 069**
**DE-A- 3 218 539**
**DE-B- 1 750 309**
**US-A- 4 303 104**
**US-A- 4 362 187**

(73) Patentinhaber: **Hegler, Wilhelm, Goethestrasse 2,
D-8730 Bad Kissingen(DE)**

(72) Erfinder: **Hegler, Wilhelm, Goethestrasse 2, D-8730 Bad
Kissingen(DE)**
Erfinder: **Hegler, Ralph-Peter, Dr. Dipl.-Ing.,
Goethestrasse 2, D-8730 Bad Kissingen(DE)**

(74) Vertreter: **Rau, Manfred, Dr. Dipl.-Ing. et al, Rau &
Schneck, Patentanwälte Königstrasse 2,
D-8500 Nürnberg 1(DE)**

ACTORUM AG

## Beschreibung

Die Erfindung betrifft ein Rohrverbindung-Element nach dem Oberbegriff des Anspruches 1.

Für Verbund- und Rippenrohre werden Rohrverbindungs-Elemente üblicherweise durch Spritzgießen hergestellt. Bei derartigen Rohrverbindungs-Elementen handelt es sich um Verzweigungen bzw. Abzweige, Bögen bzw. Winkel und auch Steckmuffen. Derartige durch Spritzgießen hergestellte Rohrverbindungs-Elemente entsprechen von ihrer Konzeption her nicht dem Prinzip der Leichtbau-Konstruktion, durch die sich Doppelwand-Rohre bzw. Verbund-Rohre und Rippen-Rohre auszeichnen. Darüber hinaus ist der Aufwand für die Spritzgießwerkzeuge außerordentlich groß.

Für einfache Wellrohre ist es bekannt, Rohrverbindungs-Elemente aus kalibrierten Rohren bzw. Hohlprofilen herzustellen, deren Innen-Querschnitt dem Außen-Querschnitt der zu verbindenden Rohre angepaßt ist. Diese Rohrverbindungs-Elemente werden aus mehreren Abschnitten hergestellt, die an ihren Stoß-Verbindungsflächen miteinander durch Verschweißen, Kleben o. dgl. verbunden sind.

Der Erfindung liegt die Aufgabe zugrunde, Rohrverbindungs-Elemente der gattungsgemäßen Art zu schaffen, die der Leichtbau-Konzeption von Doppelwand-Rohren oder Rippen-Rohren angepaßt sind, andererseits aber hohe Tragfähigkeit in Rohrachsrichtung und gute hydraulische Eigenschaften aufweisen.

Diese Aufgabe wird erfindungsgemäß durch die Merkmale im Kennzeichnungsteil des Anspruches 1 gelöst. Innerhalb des Rohrverbindungs-Elementes sind keine Toträume, da an den Stoß-Verbindungsstellen der einzelnen Abschnitte einerseits die Kern-Rohre und andererseits die Mantel-Rohre fest miteinander verbunden sind. Da die Kern-Rohre nur sehr geringe Wandstärken haben, tragen sie zur Tragfähigkeit in Rohrachsrichtung nur wenig bei. Die Kraftübertragung (Zug-, Druck-, Biegebelastung u. dgl.) zwischen den Abschnitten erfolgt primär also über das Mantelrohr. Die Rohrverbindungs-Elemente haben also günstige mechanische Eigenschaften bei geringem Rohstoffeinsatz. Die mechanischen Anforderungen, die an das Rohrsystem, d.h. die miteinander mittels der Rohrverbindungs-Elemente zu verbindenden Rohre, gestellt werden, werden von diesen Elementen ebenfalls erfüllt. Da in den Rohrverbindungs-Elementen keine Toträume gebildet sind, weisen sie optimale hydraulische Eigenschaften auf. Kritische Stellen für Feststoff-Ablagerungen, woraus sich Verstopfungen ergeben könnten, sind nicht vorhanden. Die erfindungsgemäßen Maßnahmen ermöglichen im Bedarfsfall auch eine wasserdichte Verbindung zwischen den anzuschließenden Rohren und den Rohrverbindungs-Elementen. Die Herstellung der Rohrverbindungs-Elemente ist außerordentlich kostengünstig, da keine aufwendigen Spritzgießwerkzeuge erforderlich sind. Da die Kern-Rohre den anzuschließenden Rohren identisch sind, müssen nur die Mantel-Rohre gesondert hergestellt werden. Damit kann ohne zusätzlichen Aufwand eine hohe Flexibilität in der Ausgestaltung der Rohrverbindungs-Elemente erreicht werden.

Zahlreiche weitere Vorteile und Merkmale der Erfindung ergeben sich aus den Unteransprüchen und der nachfolgenden Beschreibung von Ausführungsbeispielen der Erfindung anhand der Zeichnung. Es zeigt

Fig. 1 ein Rohrverbindungs-Element in Form eines Winkel-Stücks,

Fig. 2 ein Rohrverbindungs-Element in Form eines anderen Winkelstücks,

Fig. 3 ein Rohrverbindungs-Element in Form eines Verzweigungs-Stücks,

Fig. 4 ein Rohrverbindungs-Element in Form eines anderen Rohrverzweigungs-Stückes,

Fig. 5 einen Teil-Längsschnitt durch ein Kern-Rohr,

Fig. 6 einen Teil-Querschnitt durch das Kern-Rohr nach Fig. 5 entsprechend der Schnittlinie VI-VI in Fig. 5,

Fig. 7 einen Teil-Längsschnitt durch ein Kern-Rohr in einer abgewandelten Ausführung,

Fig. 8 einen Teil-Querschnitt durch das KernRohr nach Fig. 7 entsprechend der Schnittlinie VIII-VIII in Fig. 7,

Fig. 9 einen Teil-Längsschnitt durch ein Kern-Rohr in einer weiteren abgewandelten Ausführungsform,

Fig.10 einen Teil-Querschnitt durch das Kern-Rohr nach Fig. 9 entsprechend der Schnittlinie X-X in Fig. 9,

Fig.11 eine Verbindung zwischen Kern-Rohr und Mantel-Rohr durch Kleben,

Fig.12 eine Verbindung von Kern-Rohr und Mantel-Rohr durch Verschweißen,

Fig. 13 eine Verbindung zwischen Kern-Rohr und Mantel-Rohr mittels eines Schrumpf-Schlauches.

Fig. 14 ein Rohrverbindungs-Element in Form eines T-Verzweigungs-Stücks in teilweise aufgebrochener Darstellung,

Fig. 15 eine Verbindung zwischen einem als Rippen-Rohr ausgebildeten Kern-Rohr und einem Mantel-Rohr im Teil-Längsschnitt,

Fig. 16 einen Teil-Querschnitt durch Fig. 15 gemäß der Schnittlinie XVI-XVI in Fig. 15 und

Fig. 17 einen Teil-Querschnitt durch das Mantelrohr nach Fig. 15 ohne eingefügtes Kern-Rohr.

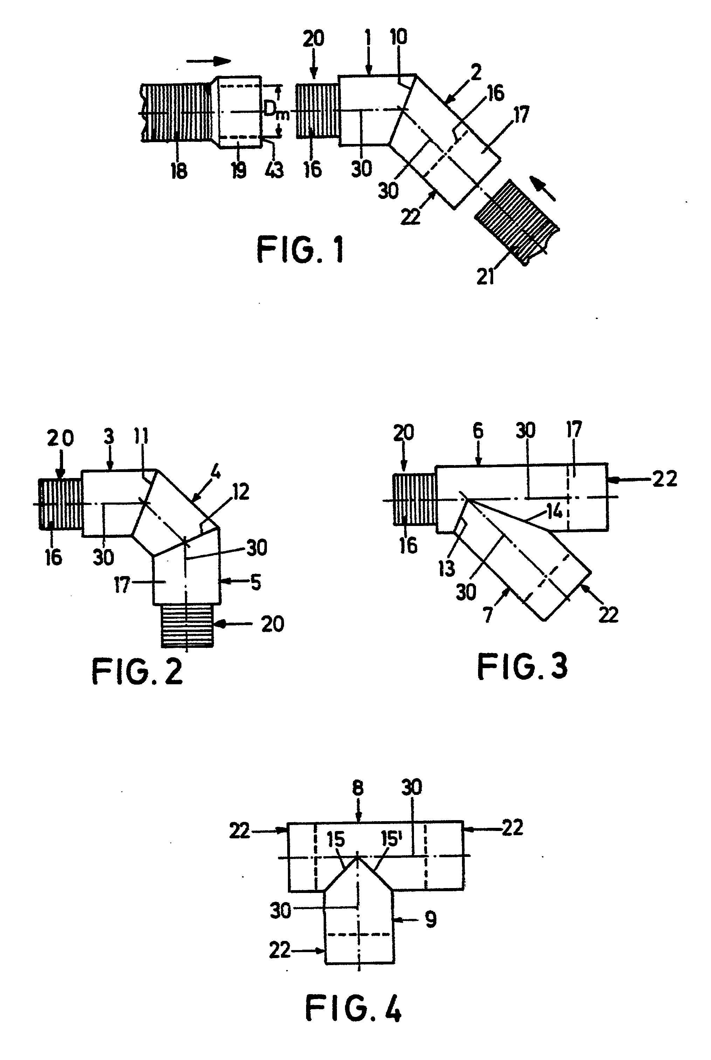

In den Figuren 1 bis 4 sind nur beispielhaft einige Rohrverbindungs-Elemente dargestellt. Alle Rohrverbindungs-Elemente bestehen aus mehreren Abschnitten 1 bis 9, die an ihren Stoß-Verbindungs-Flächen 10 bis 15, 15' flüssigkeitsdicht und fest miteinander verbunden, in der Regel also verschweißt oder verklebt, sind. Die einzelnen Abschnitte 1 bis 9 und damit auch die gesamten Rohrverbindungs-Elemente bestehen in ihrem Grundaufbau jeweils aus einem Kern-Rohr 16 und einem Mantel-Rohr 17.

Das Kern-Rohr 16 ist üblicherweise der Art nach identisch mit den Rohren, die mittels des jeweiligen Rohrverbindungs-Elementes miteinander verbunden werden sollen. In Fig. 1 ist dies angedeutet. Das links angeordnete Rohr 18 weist eine Muffe 19 auf, die über das über den zugeordneten Abschnitt 1 vorstehende Kern-Rohr 16 geschoben und hierdurch mit dem Element verbunden werden soll. Wenn das Kern- Rohr 16 über das Mantel-Rohr 17 zur Einführung in eine Muffe 19 eines Rohres 18 vorsteht, spricht man vom Spitzende 20. Von rechts unten wird ein Rohr 21 in den Abschnitt 2 eingeschoben, der in diesem Bereich mit einem Muffen-Ende 22 versehen ist, d.h. das in diesem Abschnitt 2 befindliche Kern-Rohr 16 endet deutlich vor der Stirnseite dieses Abschnittes 2, so daß das am zugeordneten Ende nicht mit einer Muffe versehene Rohr 21 in dieses Muffen-Ende 22 eingeschoben werden kann. Bei den Rohrverbindungs-Elementen kann es sich um 45°-Winkel (Fig. 1), 90°-Winkel (Fig. 2), 45°-Schrägstücke bzw. 45°-Verteiler (Fig. 3) oder 90°-Schrägstücke bzw. 90°-Verteiler bzw. T-Stücke (Fig. 4) handeln. Von ihrer Grundform her sind zahlreiche weitere Ausführungen bekannt, die auch auf die noch zu schildernde Weise realisiert werden können.

Nachfolgend werden Ausführungen des Kern-Rohres 16 beschrieben, und zwar in der Ausgestaltung als Doppelwand- bzw. Verbund-Rohre. Sie bestehen jeweils aus einem durchgehend zylindrischen Innen-Rohr 23 und einem gewellten Außen-Rohr 24. Die Herstellung dieser Rohre erfolgt in aus der DE-A 17 04 718 (entsprechend US-A 3 677 676) bekannter Weise, wobei die Verbindung zwischen Innen-Rohr 23 und Außen-Rohr 24 stattfindet, wenn die später das Innen-Rohr 23 und das Außen-Rohr 24 bildenden warmplastischen Schläuche aus Kunststoff hinter dem Spritzkopf des Extruders zusammengeführt werden. Im Bereich zwischen zwei benachbarten Kreisringen 25 des Außen-Rohres 24, also im Bereich eines Wellentales 26, sind Innen-Rohr 23 und Außen-Rohr 24 einstückig.

Jeder Kreisring 25 hat - wie aus der Zeichnung hervorgeht - den Querschnitt eines sich nach außen leicht verjüngenden Trapezes, wobei dieser Trapez-Querschnitt außen durch einen ringzylindrischen Außenwand-Abschnitt 27 und seitlich durch zwei Seitenwand-Abschnitte 28, 29 begrenzt wird, die - bezogen auf die Mittel-Längs-Achse 30 - radial nach außen aufeinander zu geneigt sind. Die Basis des Trapezes wird durch das jeweilige Innen-Rohr 23 gebildet.

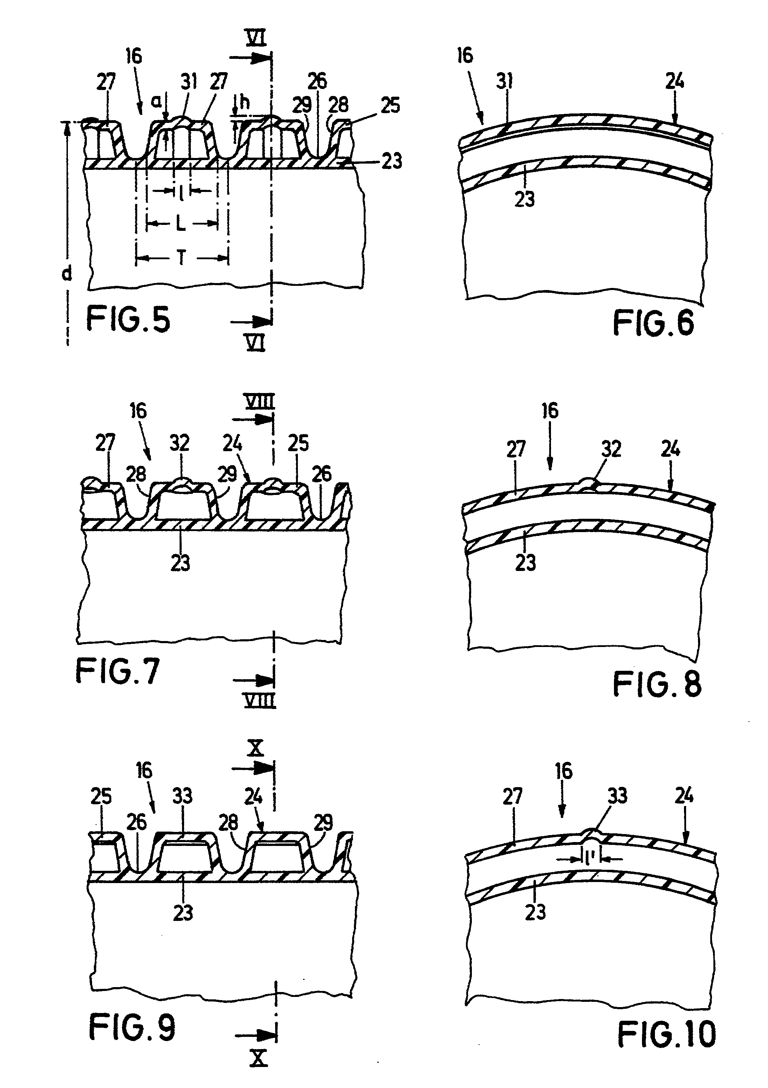

In der Ausgestaltung nach den Figuren 5 und 6 ist der Außenwand-Abschnitt 27 jeweils mit einer ringförmig umlaufenden, flachen Erhöhung 31 versehen, die aus dem Außenwand-Abschnitt 27 ausgeformt ist, also etwa die gleiche Dicke a wie der Außenwand-Abschnitt 27 und die Seitenwand-Abschnitte 28, 29 aufweist. Die Erstreckung der ringförmigen Erhöhung in Richtung der Achse 30 beträgt 1. Die Erstreckung des Kreisrings-25 in Richtung der Achse 30 ist L. Dieses Maß L ist geringer als die Teilung T des jeweiligen Röhres durch die Kreisringe 25, die durch den Abstand der Mitten zweier benachbarter Wellentäler 26 gegeben ist. Die ringförmigen Erhöhungen 31 erstrecken sich um das radiale Maß h über die zylindrischen Außenwand-Abschnitte 27. Der Außen-Durchmesser der Außenwand-Abschnitte 27 wird mit d bezeichnet.

Wie sich aus den Figuren 7 und 8 ergibt, kann das Doppelwand-Rohr nach den Figuren 5 und 6 in der Weise abgewandelt werden, daß anstelle der ringförmig umlaufenden Erhöhung 31 eine noppenförmige Erhöhung 32 im Außenwand-Abschnitt 27 ausgebildet wird. Da das Rohr ansonsten unverändert ist, werden die gleichen Bezugsziffern verwendet. Dies gilt auch für die Maß-Bezeichnungen.

Weiterhin ergibt sich aus den Figuren 9 und 1o, daß - bei ansonsten wieder identischer Ausgestaltung - auf den zylindrischen Außenwand-Abschnitten 27 sich parallel zur Achse 30 erstreckende, linienförmige axiale Erhöhungen 33 ausgebildet sind. Auch hier werden ansonsten wieder dieselben Bezugsziffern und Maß-Bezeichnungen verwendet. Die Doppelwand-Rohre in der grundlegenden Ausgestaltung nach den Figuren 5 bis 10, und zwar insbesondere mit den ringförmig umlaufenden Erhöhungen 31 nach den Figuren 5 und 6, sind aus der DE-OS 36 03 481 (entsprechend US-Ser.No. 008 584) bekannt.

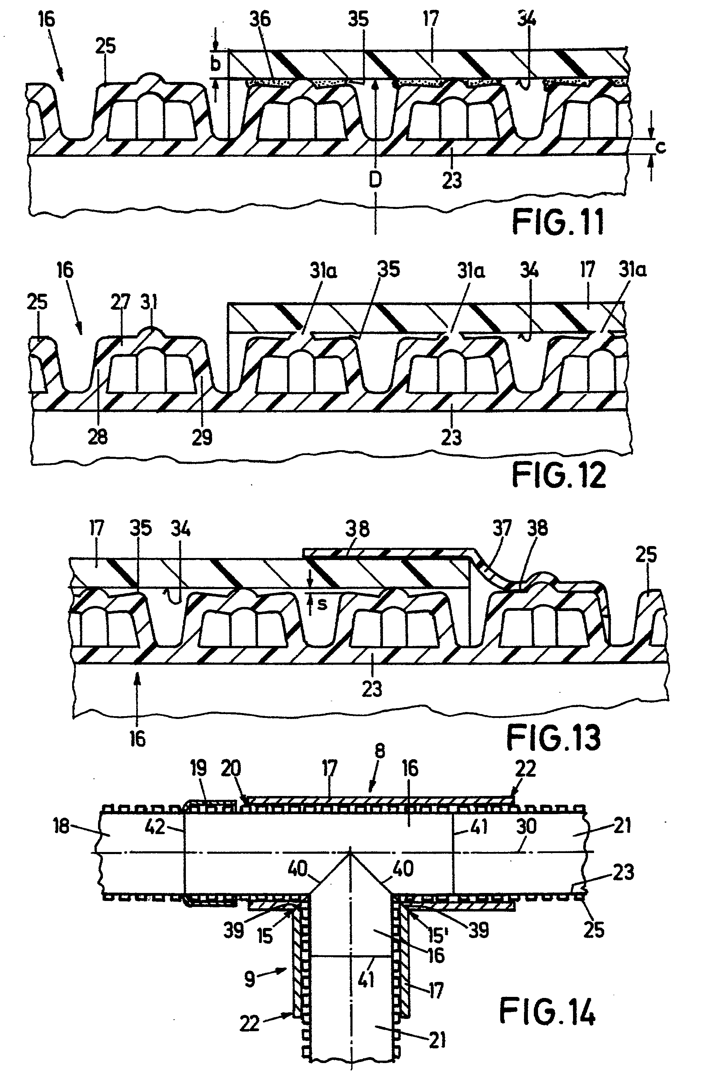

In den Figuren 11 bis 13 sind verschiedene Möglichkeiten der Verbindung zwischen Kern-Rohr 16 und Mantel-Rohr 17 dargestellt, wobei das Kern-Rohr 16 in der Ausgestaltung nach den Figuren 5 und 6 gewählt ist.

Das jeweilige Mantel-Rohr 17 weist eine Wandstärke b auf, die deutlich größer ist als die Wandstärke c des Innen-Rohres 23. Es gilt b > 1,5c. Als obere Grenze gilt b<5c. Bevorzugt gilt b≈2c.

Für den Innen-Durchmesser D des Mantel-Rohres 17 gilt in bezug auf die entsprechenden Abmaße des Kern-Rohres 16 d<D<d + 2h. Dies heißt mit anderen Worten, daß beim Einschieben des Kern-Rohres 16 in das Mantel-Rohr 17 die ringförmigen Erhöhungen 31 (bzw. die noppenförmigen Erhöhungen 32 oder die linienförmigen axialen Erhöhungen 33) definiert an die Innenwand 34 des Mantel-Rohres 17 angepreßt werden, wobei gleichzeitig die Kreisringe 25 in der Weise verformt werden, daß die ringzylindrischen Außenwand-Abschnitte 27 radial nach innen durchgedrückt werden.

Andererseits kommen die Außenwand-Abschnitte 27 (mit Ausnahme der Erhöhungen 31 bzw. 32 bzw. 33) noch nicht mit der Innenwand 34 des Mantel-Rohres 17 in Berührung. Mantel-Rohr 17 und Kern-Rohr 16 werden aber radial miteinander verspannt. Zwischen der Innenwand 34 und den Außenwand-Abschnitten 27 bilden sich angenähert ringzylindrische Spalte 35, deren Spaltweite s kleiner als die Höhe h der Erhöhungen 31 bzw. 32 bzw. 33 ist. Der unmittelbare Kontakt zwischen dem Kern-Rohr 16 und dem Mantel-Rohr 17 ist also nur punktförmig (bei Verwendung der noppenförmigen Erhöhungen 32) oder linienförmig (bei Verwendung der ringförmigen Erhöhungen 31 bzw. der linienförmigen axialen Erhöhungen 33).

Wie sich aus Fig. 11 ergibt, kann eine feste Verbindung zwischen dem Kern-Rohr 16 und dem Mantel-Rohr 17 dadurch hergestellt werden, daß der ringzylindrische Spalt 35 durch eine Klebstoff-Schicht 36 ausgefüllt wird. Diese Klebstoff-Schicht 36 kann vor dem Einschieben des Kern-Rohres 16 in das Mantel-Rohr 17 auf die zylindrischen Außenwand-Abschnitte 27 des Kern-Rohres 16 aufgetragen werden. Diese Klebstoff-Schicht 36 kann aber auch dadurch erzeugt werden, daß vor dem Einschieben des Kern-Rohres 16 in das Mantel-Rohr 17 Klebstoff auf die Innenwand 34 des Mantel-Rohres 17 aufgetragen wird. Die letztgenannte Methode kann montagetechnische Vorteile mit sich bringen. In diesem Fall kann es vorkommen, daß die Klebstoff-Schicht 36 nicht auf allen Außenwand-Abschnitten 27 ausgebildet wird, was aber auf die Dichtigkeit und Festigkeit der Verbindung zwischen Kern-Rohr 16 und Mantel-Rohr 17 keinen Einfluß hat. Da die Spaltweite s sich im Bereich von 0,1 bis 0,2 mm bewegt, ist die Klebstoff-Schicht 36 ausreichend dick, so daß eine entsprechend gute Klebeverbindung gewährleistet ist.

Bei der Ausführung nach Fig. 12 sind die Erhöhungen 31 mit der Innenwand 34 des Mantel-Rohres 17 verschweißt. Die Erhöhungen 31 werden beim Verschweiß-Vorgang unter Bildung von Schweißflächen 31a deformiert bzw. flachgedrückt, so daß die radiale Verformung der Außenwand-Abschnitte 27 beim Einschieben des Kernrohres 16 in das Mantel-Rohr 17 teilweise wieder rückgängig gemacht wird.

Bei der Ausgestaltung nach Fig. 13 erfolgt die Verbindung zwischen dem Kern-Rohr 16 und dem Mantel-Rohr 17 mittels eines Schrumpfschlauches 37, der allerdings nur einsetzbar ist, wenn das Rohrverbindungs-Element mit einem Spitzende 20 versehen ist. Der Schrumpfschlauch 37 wird hierbei über das Ende des Mantel-Rohres 17 und dem aus dem Mantel-Rohr 17 herausragenden Bereich des Kern-Rohres 16 geschoben und in der üblichen Weise durch entsprechende Wärmebehandlung aufgeschrumpft. Er legt sich hierbei fest um den Außenumfang des Mantel-Rohres 17 und über den dem Mantel-Rohr 17 benachbarten Kreisring 25 des Kern-Rohres 16, dessen Außenprofil er sich anpaßt, wodurch auch eine feste axiale Verbindung zwischen dem Schrumpfschlauch 37 und dem Kern-Rohr 16 hergestellt wird. Gleichzeitig wird eine an der Innenseite des Schrumpfschlauches 37 befindliche Klebstoff-Schicht 38 aktiviert, wodurch eine zusätzliche Sicherung sowie eine wasserdichte Verbindung durch eine Verklebung zwischen Schrumpfschlauch 37 und Kern-Rohr 16 bzw. Mantel-Rohr 17 erreicht wird. Derartige, mit einer aktivierbaren Klebstoff-Schicht versehene Schrumpfschläuche sind handelsüblich.

Fig. 14 zeigt ein Rohrverbindungs-Element in Form eines 90°-Schrägstücks bzw. T-Stücks, das der Darstellung in Fig. 4 entspricht; aus diesem Grunde sind dort auch identische Bezugszeichen verwendet. Es ist erkennbar, daß die Mantel-Rohre 17 des Abschnitts 8 einerseits und des Abschnitts 9 andererseits im Bereich der Stoß-Verbindungs-Flächen 15 bzw. 15' durch Klebe- bzw. Schweiß-Verbindung 39 miteinander verbunden sind. Entsprechend ist erkennbar, daß die Kern-Rohre 16 in diesem Bereich mittels Klebe- bzw. Schweiß-Verbindungen 40 miteinander verbunden sind. Weiterhin ist erkennbar, daß das in das Muffen-Ende 22 eingeschobene Rohr 21 mit dem zugeordneten Kern-Rohr 16 in einer Stoßfläche 41 dicht aneinanderliegt. In gleicher Weise liegt das Kern-Rohr 16 am Spitzende 20 in der Muffe 19 des Rohres 18 dicht in einer Stoßfläche 42 an dem Rohr 18 an, so daß jeweils im Bereich der Stoßflächen 41, 42 eine totraumfreie Verbindung gewährleistet ist.

In allen vorstehend geschilderten Fällen ist das Mantel-Rohr 17 in Form eines kalibrierten Ringzylinders ausgebildet, wobei die Herstellung solcher kalibrierten Rohre in üblicher Weise erfolgt. Für ein Rohrverbindungs-Element für Rohre 18, 21 mit der Nennweite 100 gelten hierbei folgende Maße:

$d \approx 110$ mm
$T \approx 12$ mm
$l \approx 2,0$ mm
$h \approx 0,3$ mm
$a \approx 0,5 - 0,6$ mm
$L \approx 10$ mm

Im übrigen gelten hierbei folgende Relationen:
Für die radiale Erstreckung h der Erhöhungen 31, 32, 33 bezogen auf den Außendurchmesser d gilt

$$0,002\,d \le h \le 0,004\,d$$

Für die axiale Erstreckung 1 der ringförmigen Erhöhungen 31 bzw. der noppenförmigen Erhöhungen 32 bezogen auf die axiale Erstreckung L der Kreisringe 25 gilt

$$0,010\,L \le 1 \le 0,35\,L$$

Für die axiale Erstreckung 1 der ringförmigen Erhöhungen 31 bzw. der noppenförmigen Erhöhungen 32 bzogen auf die Dicke a der Außenwand-Abschnitte 27 gilt

$$3\,a \le 1 \le 5\,a$$

Für die tangentiale Breite 1' der linienförmigen axialen Erhöhungen 33 gelten die gleichen Beziehungen wie vorstehend für 1.

Grundsätzlich gilt, daß der Innendurchmesser Dm der Muffe 19 des Rohres 18 gleich dem Innendurchmesser D des Mantel-Rohres 17 ist, wobei zur Erleichterung der Montage die Muffe 19 in bekannter Weise an ihrem Einführende 43 geringfügig erweitert sein kann.

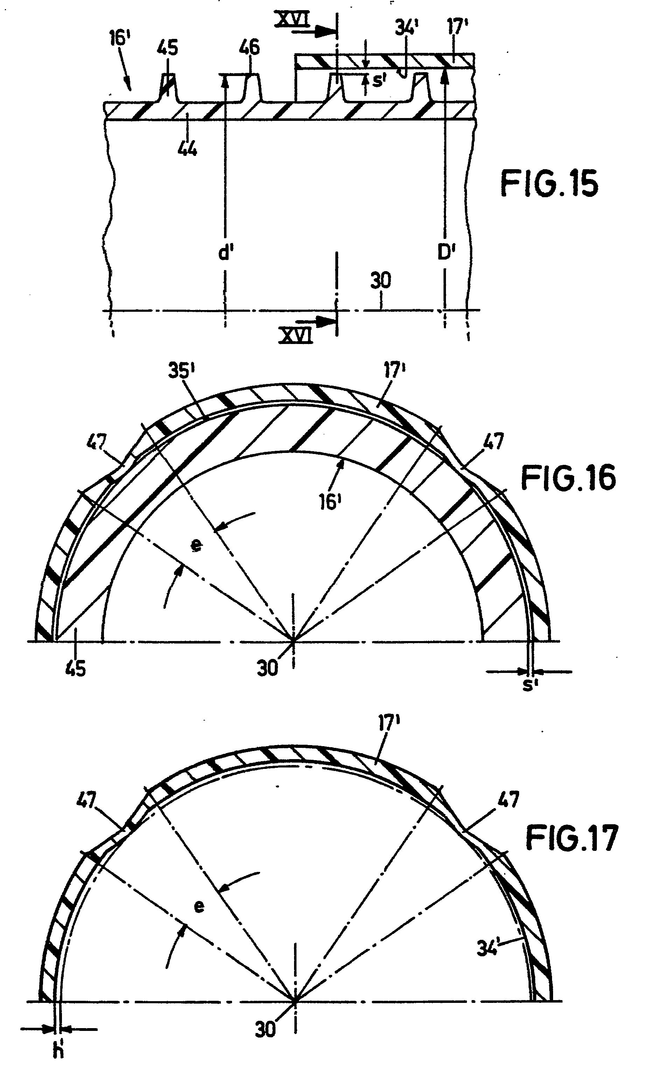

Rohrverbindungs-Elemente der geschilderten Art konnen gemäß Fig. 15 bis 17 auch für Rippen-Rohre ausgestaltet sein, wobei das Kern-Rohr 16' als Rippen-Rohr ausgebildet ist. Derartige Rippen-Rohre sind beispielsweise aus der DE-C 2 450 171 (entsprechend US-A 3 998 579) bzw. der DE-A 3 725 286 bekannt. Derartige Rippen-Rohre weisen ein im wesentlichen ringzylindrisches Rohr 44 auf, von dessen Außenumfang Radial-Rippen 45 nach außen vorstehen, die einen Außen-Durchmesser d' aufweisen. Das Mantel-Rohr 17' weist einen Innen-Durchmesser D' auf, der etwas größer ist als der Außen-Durchmesser d' der Rippen 45, so daß zwischen deren etwa zylindrischer Außen-Umfangsfläche 46 und der Innenwand 34' ein Spalt s' gebildet wird, dessen radiale Breite etwa 0,1 bis 0,2 mm beträgt.

Das Mantel-Rohr 17' ist mit parallel zur Längsachse 30 durchgehend verlaufenden Sicken, also radial nach innen gerichteten Erhöhungen 47 versehen, die radial nach innen um ein Maß h' vorstehen, das geringfügig größer ist als die Spaltweite s', so daß beim Einschieben des Kern-Rohres 16' in das Mantel- Rohr 17' die Rippen 45 unter radialer Verspannung gegen die sich axial erstreckenden Erhöhungen 47 anliegen. Es gilt $0,002\ D' \leqq h' \leqq 0,004\ D'$.

Die zwischen den benachbarten Erhöhungen verbleibenden Spalte 35' können - wie bereits geschildert - mit Klebstoff gefüllt werden. In gleicher Weise kann eine Verschweißung zwischen diesen Erhöhungen 47 und dem anliegenden Bereich der Rippen 45 durchgeführt werden oder eine Verbindung mittels Schrumpfschlauchs durchgeführt werden.

Die Erhöhungen 47 erstrecken sich tangential über einen Umfangswinkel e, für den gilt $20° < e < 30°$.

Eine feste Verbindung zwischen dem Kern-Rohren 16, 16' und den zugehörigen Mantel-Rohren 17, 17' jedes Abschnittes 1 bis 9 ist nicht zwingend formschlüssig; sie kann auch kraftschlüssig, beispielsweise durch einen ausreichend festen Reibschluß hergestellt sein.

## Patentansprüche

1. Rohrverbindungs-Element, insbesondere Winkelstück oder Verzweigungsstück, zur Verbindung von Rohren (18, 21), die im wesentlichen aus einem durchgehenden Innenrohr (23, 44) und mit diesem verbunden, sich radial nach außen erstreckenden, der Versteifung des Rohres dienenden Erhebungen (25, 45) bestehen, insbesondere zur Verbindung von Doppelwand-Rohren oder Rippen-Rohren, dadurch gekennzeichnet, daß das Rohrverbindungs-Element aus miteinander verbundenen Abschnitten (1 bis 9) besteht, die durch ein Kernrohr (16, 16') mit sich radial nach außen erstreckenden Erhebungen (25, 45) und ein Mantel-Rohr (17, 17') gebildet sind, daß benachbarte Abschnitte (1 bis 9) in der Weise an ihren Stoß-Verbindungs-Flächen (10 bis 15, 15') miteinander verbunden sind, daß jeweils die Kern-Rohre (16, 16') und die Mantel-Rohre (17, 17') dieser benachbarten Abschnitte (1 bis 9) miteinander verbunden sind, und daß das Kern-Rohr (16, 16') und das Mantel-Rohr (17, 17') jedes Abschnittes (1 bis 9) fest miteinander verbunden ist.

2. Rohrverbindungs-Element nach Anspruch 1, dadurch gekennzeichnet, daß die Kern-Rohre (16, 16') der Art nach identisch mit den miteinander zu verbindenden Rohren (18. 21) sind.

3. Rohrverbindungs-Element nach Anspruch 1, dadurch gekennzeichnet, daß eines der beiden Rohre (16, 16' bzw. 17, 17') eines Abschnittes (1 bis 9) an dessen freiem Ende über das andere Rohr (17, 17' bzw. 16, 16') vorsteht.

4. Rohrverbindungs-Element nach Anspruch 1, dadurch gekennzeichnet, daß das Mantel-Rohr (17, 17') als Tragrohr ausgebildet ist.

5. Rohrverbindungs-Element nach Anspruch 1, dadurch gekennzeichnet, daß die Erhebung (25, 45) des jeweiligen Kern-Rohres (16, 16') unter elastischer, radialer Vorspannung gegen das zugehörige Mantel-Rohr (17, 17') anliegt.

6. Rohrverbindungs-Element nach Anspruch 5, dadurch gekennzeichnet, daß die Erhebung (25, 45) punkt- oder linienförmig gegen das Mantel-Rohr (17, 17') anliegt.

7. Rohrverbindungs-Element nach Anspruch 5, dadurch gekennzeichnet, daß zwischen der Erhebung (25, 45) des jeweiligen Kern- Rohres (16, 16') und dem Mantel-Rohr (17, 17') sich radial erstreckende, elastisch nachgiebige Erhöhungen (31, 32, 33, 47) ausgebildet sind.

8. Rohrverbindungs-Element nach Anspruch 7, wobei das Kern-Rohr (16) als Doppelwand-Rohr mit Erhebungen in Form von Kreisringen (25) ausgebildet ist, die jeweils etwa den Querschnitt eines sich nach außen verjüngenden Trapezes und hierzu einen etwa ringzylindrischen Außenwand-Abschnitt (27) und sich hieran anschließend leicht geneigte Seitenwand-Abschnitte (28, 29) aufweisen, dadurch gekennzeichnet, daß der Außenwand-Abschnitt (27) mit den radial nach innen verformbaren Erhöhungen (31, 32, 33) versehen ist, deren Außen-Durchmesser (d + 2h) in unverformtem Zustand geringfügig größer ist als der Innen-Durchmesser (D) des Mantel-Rohres (17).

9. Rohrverbindungs-Element nach Anspruch 8, dadurch gekennzeichnet, daß die Erhöhungen (31, 32, 33) ringförmig, noppenförmig oder axial linienförmig ausgebildet sind.

10. Rohrverbindungs-Element nach Anspruch 7, wobei das Kern-Rohr (16') als Rippenrohr mit radial nach außen vorstehenden Rippen (45) ausgebildet ist, dadurch gekennzeichnet, daß die Erhöhungen (47) am Mantel-Rohr (17') ausgebildet sind und sich radial nach innen erstrecken, wobei der Innendurchmesser (D' − 2h') in unverformtem Zustand geringfügig kleiner ist als der Außendurchmesser (d') des Kern-Rohres (16').

11. Rohrverbindungs-Element nach Anspruch 10, dadurch gekennzeichnet, daß die Erhöhungen (47) axial und linienförmig ausgebildet sind.

## Claims

1. Pipe connecting element, particularly angle piece or bifurcating piece, to connect pipes (18, 21) which consist essentially of a continuous inner pipe (23, 44) and projections (25, 45) connected with it which extend radially outwards and serve for the stiffening of the pipe, particularly for the connection of double walled pipes or corrugated pipes, characterized in that the pipe connecting element consists of connected with each other sections (1 to 9), which are formed by a core pipe (16, 16') with outwardly extending radial projections (25, 45) and a jacket pipe (17, 17'), in that adjacent sections (l to 9) are connected on their butt joint surfaces (10 to 15, 15') in such a manner that the core pipes (16, 16') and the jacket pipes (17, 17') each of these adjacent sections (1 to 9) are connected with each other, and in that the core pipe (16, 16') and the jacket pipe (17, 17') of each section (1 to 9) are firmly connected with each other.

2. Pipe connecting element according to claim 1, characterized in that the core pipes (16, 16') are identical in type with the to-be-connected with each other pipes (18, 21).

3. Pipe connecting element according to claim 1, characterized in that one of the two pipes (16, 16' or 17, 17') of a section (1 to 9) at its free end protrudes past the other pipe (17, 17' or 16, 16').

4. Pipe connecting element according to claim 1, characterized in that the jacket pipe (17, 17') is constructed as a carrier pipe.

5. Pipe connecting element according to claim 1, characterized in that the projection (25, 45) of the respective core pipe (16, 16') is subjected to elastic radial pre-tensioning against the associated jacket pipe (17, 17').

6. Pipe connecting element according to claim 5, characterized in that the projection (25, 45) abuts in a spot-like or linear form against the jacket pipe (17, 17').

7. Pipe connecting element according to claim 5, characterized in that between the projection (25, 45) of the corresponding core pipe (16, 16') and the jacket pipe (17, 17') radially extending, elastically flexible protuberances (31, 32, 33, 47) are formed.

8. Pipe connecting element according to claim 7, where the core pipe (16) is constructed as a double walled pipe with projections in the form of circular rings (25), which each have the approximate cross-section of an outwardly tapering trapezium and, to this effect, an approximately annular cylindrical outer wall section (27) and adjoining to this slightly inclined side wall sections (28, 29), characterized in that the outer wall section (27) is provided with the protuberances which can be deformed radially inwards (31, 32, 33), whose outside diameter (d + 2h) in the non-deformed state is slightly greater than the inside diameter (D) of the jacket pipe (17).

9. Pipe connecting element according to claim 8, characterized in that the protuberances (31, 32, 33) are constructed ring, burl or axially linear shaped.

10. Pipe connecting element according to claim 7, where the core pipe (16') is constructed as a finned pipe with radially outwardly protruding fins (45), characterized in that the protuberances (47) are formed on the jacket pipe (17') and extend radially inward, while the inside diameter (D' − 2h') in undeformed state is slightly smaller than the outside diameter (d') of the core pipe (16').

11. Pipe connecting element according to claim 10, characterized in that the protuberances (47) are formed axially and in a linear shape.

**Revendications**

1. Elément de raccord de tuyaux, notamment coude ou pièce de dérivation, destiné à la liaison de tuyaux (18, 21) constitués essentiellement d'un tuyau intérieur continu (23, 44), et de surélévations (25, 45) s'étendant radialement vers l'extérieur et servant à rigidifier le tuyau, notamment pour la liaison de tuyaux à paroi double ou de tuyaux à ailettes, caractérisé en ce que l'élément de raccord de tuyaux se compose de tronçons (1 à 9) reliés entre-eux et constitués d'un tuyau formant âme (16, 16') comportant des surélévations (25, 45) s'étendant radialement vers l'extérieur, et d'un tuyau-enveloppe (17, 17'), en ce que des tronçons voisins (1 à 9) sont reliés entre-eux au niveau de leurs surfaces de joint d'assemblage (10 à 15, 15'), de telle sorte que les tuyaux formant âme (16, 16') de ces tronçons voisins (1 à 9) soient reliés entre-eux, de même que les tuyaux-enveloppe (17, 17') de ces tronçons voisins, et en ce que le tuyau formant âme (16, 16') et le tuyau-enveloppe (17, 17') de chacun des tronçons (1 à 9) sont reliés de manière fixe entre-eux.

2. Elément de raccord de tuyaux selon la revendication 1, caractérisé en ce que les tuyaux formant âme (16, 16') sont de type identique à celui des tuyaux à assembler (18, 21).

3. Elément de raccord de tuyaux selon la revendication 1, caractérisé en ce que l'un des deux tuyaux (16, 16' ou 17, 17') d'un des tronçons (1 à 9) dépasse de l'extrémité libre de l'autre tuyau (17, 17' ou respectivement 16, 16').

4. Elément de raccord de tuyaux selon la revendication 1, caractérisé en ce que le tuyau-enveloppe (17, 17') est réalisé sous la forme de tuyau porteur.

5. Elément de raccord de tuyaux selon la revendication 1, caractérisé en ce que la surélévation (25, 45) de chacun des tuyaux formant âme (16, 16'), s'appuie sous précontrainte radiale élastique contre le tuyau-enveloppe correspondant (17, 17').

6. Elément de raccord de tuyaux selon la revendication 5, caractérisé en ce que la surélévation (25, 45) s'appuie de manière ponctuelle ou linéaire, contre le tuyau-enveloppe (17, 17').

7. Elément de raccord de tuyaux selon la revendication 5, caractérisé en ce qu'entre la surélévation (25, 45) de chaque tuyau formant âme (16, 16') et le tuyau-enveloppe (17, 17'), sont réalisées des protubérances (31, 32, 33, 47) élastiquement déformables.

8. Elément de raccord de tuyaux selon la revendication 7, le tuyau formant âme (16) étant réalisé sous la forme d'un tuyau à paroi double avec des surélévations en forme d'anneaux circulaires (25) qui présentent chacun une section sensiblement en forme de trapèze se rétrécissant vers l'extérieur, en étant constitué par un tronçon de paroi extérieure (27) cylindrique annulaire, et, s'y raccordant, des tronçons de paroi latérale (28, 29) légèrement inclinés, élément de raccord caractérisé en ce que le tronçon de paroi extérieure (27) est pourvu des protubérances (31, 32, 33) déformables radialement vers l'intérieur, et dont le diamètre extérieur (d + 2h) est, à l'état non déformé, légèrement supérieur au diamètre intérieur (D) du tuyau-enveloppe (17).

9. Elément de raccord de tuyaux selon la revendication 8, caractérisé en ce que les protubérances (31, 32, 33) présentent une forme annulaire, une forme de petit bossage, ou une forme linéaire axiale.

10. Elément de raccord de tuyaux selon la revendication 7, le tuyau formant âme (16') se présentant sous la forme d'un tuyau à ailettes avec des ailettes (45) en saillie radiale vers l'extérieur, caractérisé en ce que les protubérances (47) sont réalisées sur le tuyau-enveloppe (17') en s'étendant radialement vers l'intérieur, le diamètre intérieur (D' − 2h'), à l'état non déformé, étant légèrement inférieur au diamètre extérieur (d') du tuyau formant âme (16').

11. Elément de raccord de tuyaux selon la revendication 10, caractérisé en ce que les protubérances (47) sont de forme linéaire et s'étendent en direction axiale.

FIG. 1

FIG. 2

FIG. 3

FIG. 4

FIG.5

FIG.6

FIG.7

FIG.8

FIG.9

FIG.10

FIG.11

FIG.12

FIG.13

FIG.14

**FIG.15**

**FIG.16**

**FIG.17**